# EUROPEAN PATENT SPECIFICATION

(11) **EP 0 432 830 B1**
(45) Date of publication and mention of the grant of the patent: **21.12.1994**
(21) Application number: 90203166.5
(22) Date of filing: 30.11.1990
(51) Int. Cl.: A01F 15/07, A01F 15/08

(54) **Bale wrapping apparatus for round balers**
Ballenumwickelvorrichtung für Rundballenpressen
Appareil pour envelopper une balle dans une presse à balles rondes

(30) Priority: 11.12.1989 US 448404; 11.12.1989 US 448405; 11.12.1989 US 448406
(43) Date of publication of application: 19.06.1991
(73) Proprietor: NEW HOLLAND BELGIUM N.V., B-8210 Zedelgem (BE)
(72) Inventor: Underhill, Kenneth R., Strasburg, PA 17579 (US)
(74) Representative: Vandenbroucke, Alberic

(56) References cited:
- GB-A- 2 137 927
- US-A- 4 604 855
- US-A- 4 729 213
- US-A- 4 790 125
- US-A- 4 870 812

## Description

This invention relates generally to agricultural balers typically referred to as round balers which form cylindrical (i.e. round) bales of crop material and, in particular, to a bale wrapping apparatus for use on such round balers and to a method of wrapping such bales.

It is known in a conventional type of round baler to provide an arrangement for wrapping bales with sheet material such as net or plastic film for example. Typically, such wrapping arrangements comprise feed rollers arranged to dispense the sheet material into the baler. Examples of prior art balers employing feed rollers as sheet material dispensing means are disclosed a.o. in US-A-4.604.855, US-A-4.729.213 and US-A-4.790.125. One of the drawbacks of these prior art bale wrapping apparatus is that the sheet material tends to wrap around and get tangled up on the feed rollers. High machining costs are also inherent to feed rollers, resulting in such rollers being highly expensive.

Feed rollers furthermore are not always suited on every type of round baler, as the kind of means employed to form a round bale may be incompatible with the way of operation of feed rollers. For example, in US-A-4.870.812, a round baler is disclosed wherein a sledge assembly comprising a plurality of rollers cooperates with an apron consisting of a plurality of belts to define a bale forming chamber therebetween. The sledge assembly, which is movable between a bale starting position and a full bale position during bale formation, further comprises an idler roller in engagement with the apron to maintain the apron in close proximity to one of said rollers during movement of the sledge assembly between said bale starting and full bale positions. As the inlet or throat for the sheet material into the bale forming chamber is defined by the space between the idler roller and the adjacent roller on the sledge assembly, resulting in said inlet being rather confined, it is found difficult to employ conventional wrapping apparatus having feed rollers. Furthermore, there is not enough space available on the baler disclosed in US-A-4.870.812 for mounting said conventional wrapping apparatus.

It is therefore the objective of the present invention to provide bale wrapping apparatus as well as a method for dispensing sheet material and wrapping cylindrical bales of crop material therewith without utilizing feed rollers.

According to one aspect of the present invention, an agricultural baler is provided having a bale forming chamber for forming cylindrical bales of crop material therein and a bale wrapping apparatus for wrapping sheet material circumferentially around a cylindrical bale disposed in the bale forming chamber; said wrapping apparatus comprising means for dispensing sheet material from a supply source, through an inlet of the bale forming chamber, into said chamber and, said dispensing means including means for gripping a tail of the sheet material;
said baler being characterized in that the dispensing means, together with the gripping means thereof holding a tail of the sheet material, are movable between :
- a retracted position at a location remote from said inlet for preventing sheet material from being dispensed into the bale forming chamber, and
- a dispensing position generally at said inlet for presenting said tail at said inlet for insertion into the bale forming chamber.

Preferably, said gripping means comprise a pair of juxtaposed clamping members including an upper plate and a lower plate which are resiliently urged towards each other. An electric motor and link means are provided for moving the sheet dispensing means between said retracted and dispensing positions.

The bale wrapping apparatus according to the instant invention is suitably mounted on a round baler comprising a sledge assembly having a plurlity of rollers extending transversely of the baler frame. An apron is movably supported on said frame and cooperates with said rollers to define the bale forming chamber. The sheet dispensing means are pivotally mounted on the sledge assembly and are operable to insert the tail of the sheet material into the bale forming chamber through a gap between the apron and one of the rollers of the sledge assembly.

According to another aspect of the present invention, a method of wrapping cylindrical bales of crop material with sheet material in a bale forming chamber of an agricultural baler is provided; said method comprising the step of gripping a tail of the sheet material in dispensing means during formation of a cylindrical bale of crop material in preparation for subsequently dispensing the sheet material through an inlet of the bale forming chamber; and
being characterized in that it further also comprises the steps of :
- moving the dispensing means from a retracted position at a location remote from the inlet of the bale forming chamber to a dispensing position generally at said inlet after completion of a cylindrical bale in the bale forming chamber;
- inserting said tail of the sheet material into the bale forming chamber when the dispensing means is in said dispensing position; and
- moving the dispensing means from the dispensing position to the retracted position after at least one layer of sheet material has been wrapped circumferentially around said cylindrical bale.

The inserting step referred to hereabove is performed without utilizing feed rollers.

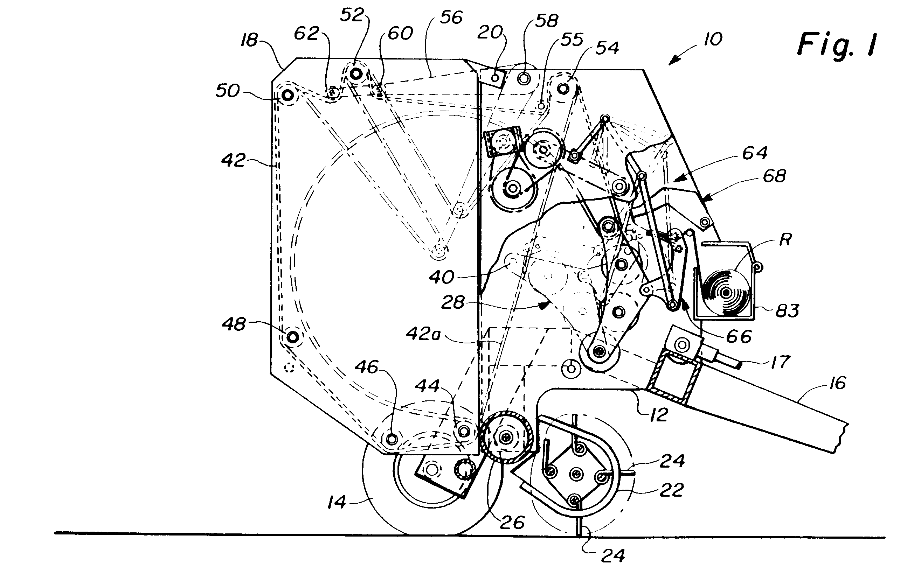

A bale wrapping apparatus and a method for wrapping cylindrical bales with sheet material in accordance with the present invention will now be described in greater detail, by way of example, with reference to the accompanying drawings, in which:
Figure 1 is a side elevational view of a round baler according to the preferred embodiment of the present invention;
Figure 2 is an enlarged side elevational view of a portion of the round baler of Figure 1 illustrating the bale wrapping method of the present invention;
Figure 3 is an enlarged view of part of the round baler of Figure 1;
Figure 4 is a view taken in the direction of arrows 4-4 in Figure 3;
Figure 5 is a view taken in the direction of arrows 5-5 in Figure 3; and
Figure 6 is a view taken in the direction of arrows 6-6 in Figure 3.
Referring to Figure 1, a round baler 10 according to the present invention includes a main frame 12 supported by a pair of wheels 14. A tongue 16 is provided on the forward portion of the main frame 12 for connection to a tractor (not shown). A tailgate 18 is pivotally connected to the main frame 12 by stub shafts 20 so that the tailgate 18 may be closed as shown in Figure 1 during bale formation or opened to discharge a completed bale. A conventional pickup 22 is mounted on the main frame 12 and is supported by a pair of wheels (not shown). The pickup 22 includes a plurality of fingers or tines 24 movable in a predetermined path to lift crop material from the ground and deliver it rearwardly toward a floor roll 26 which is rotatably mounted on the main frame 12.

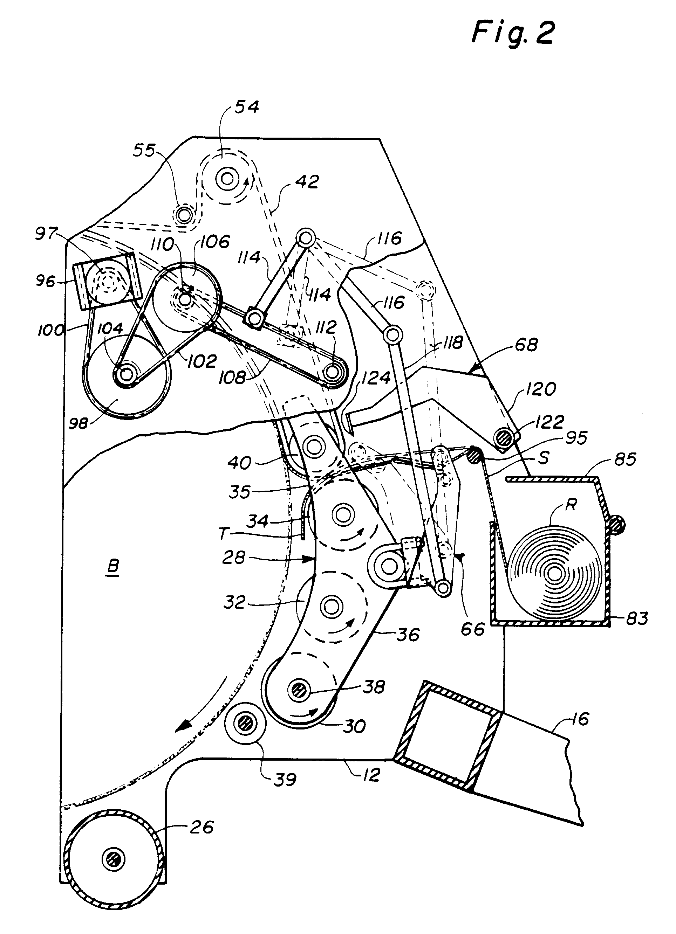

A sledge assembly 28 includes a plurality of rollers 30, 32, 34 extending transversely of the main frame 12 in an arcuate arrangement best seen in Figure 2. The rollers 30, 32, 34 are journalled at the ends thereof in a pair of spaced apart arms 36. These arms 36 are pivotally mounted inside the main frame 12 on stub shafts 38 for permitting movement of the sledge assembly 28 between a bale starting position shown in broken lines in Figure 1 and a full bale position shown in solid lines in Figure 1. The rollers 30, 32, 34 are driven in a counterclockwise direction as viewed in Figures 1 and 2 by conventional means (for example, chains and sprockets or gears) connected with a drive shaft 17 which is adapted for connection to the power take off of a tractor (not shown). A stripper roll 39 is located adjacent roller 30 and is driven in a counter clockwise direction, as viewed in Figure 2, to strip crop material from the roller 30. An idler roller 40 is carried by the arms 36 for movement in an arcuate path when the sledge assembly 29 moves between its bale starting and full bale positions. The idler roller 40 is freely rotatable.

An apron 42 includes a plurality of flat belts arranged side-by-side and supported on guide rolls 44, 46, 48, 50, 52 which are rotatably mounted in the tailgate 18. The apron 42 is also supported on a drive roll 54 which is rotatably mounted in the main frame 12. Although the apron 42 passes between the roller 34 and the idler roller 40, it is in engagement with only the idler roller 40 but the roller 34 is located in close proximity to the apron belts to strip crop material from the apron 42. Further conventional means (not shown) are connected with the drive shaft 17 to provide rotation of the drive roll 54 in a direction which causes movement of the apron 42 along the path indicated in broken lines in Figure 1. An additional guide roll 55 in the main frame 12 ensures proper driving engagement between the apron 42 and the drive roll 54. A pair of take up arms 56 are pivotally mounted on the main frame 12 by a cross shaft 58 for movement between inner and outer positions shown in Figure 1. Take up arms 56 carry additional guide rolls 60 and 62 for supporting the apron 42. Resilient means (not shown) are provided to normally urge the take up arms 56 toward their inner positions while resisting movement thereof from their inner positions to their outer positions.

When the round baler 10 is in the condition shown in Figure 1 with the tailgate 18 closed, an inner course 42a of the apron 42 extending between the guide roll 44 and the idler roller 40 cooperates with the rollers 30, 32, 34 of the sledge assembly 28 to define a bale forming chamber. The apron inner course 42a forms a rear wall of the chamber while the rollers 30, 32, 34 form a front wall of the chamber. The floor roll 26 is disposed in the bottom of the chamber between the front and rear walls thereof, and the roller 30 is spaced from the floor roll 26 to form a throat or inlet for the chamber.

As the round baler 10 is towed across a field by a tractor (not shown), the pickup tines 24 lift crop material from the ground and deliver it through the throat formed between the floor roll 26 and the roller 30 into the bale forming chamber of the baler 10 . The crop material is carried rearwardly by the floor roll 26 into engagement with the apron inner course 42a which carries it upwardly and forwardly into engagement with the rollers 30, 32, 34. The crop material is coiled in a clockwise direction as viewed in Figure 1 to start a bale core. Continued feeding of crop material into the bale forming chamber by the pickup tines 24 causes the apron inner course 42a to expand in length around a portion of the circumference of the bale core as the diameter thereof increases. The take up arms 56 rotate from their inner position shown in Figure 1 toward their outer position to permit such expansion of the apron inner course 42a. When a bale has been formed and then wrapped as described later with sheet material such as net or plastic film, the tailgate 18 is opened by conventional means (for example, hydraulic cylinders) and the bale is ejected. Subsequent closing of the tailgate 18 returns the apron inner course 42a to the location shown in Figure 1, and the round baler 10 is ready to form another bale.

It will be understood that during formation of a bale, sledge assembly 28 moves from its bale starting position to its full bale position. This movement of the sledge assembly 28 causes the idler roller 40 to move in an arcuate path while maintaining the apron 42 in close proximity to the roller 34, thereby allowing the roller 34 to strip crop material from the apron 42 but preventing the loss of crop material between the roller 34 and the apron 42 during formation of a bale. The sledge assembly 28 is pushed outwardly toward its full bale position during bale formation and is pulled inwardly toward its bale starting position during bale ejection without utilizing any additional mechanisms.

In an alternative embodiment of the round baler 10 which is not shown, apron 42 consists of a pair of chains connected together at spaced intervals by transverse slats, and the idler roller 40 is replaced by a pair of idler sprockets engaged with the chains. Also in this alternative embodiment, the guide rolls 44, 46, 48, 50, 52, 55, 60, 62 would be replaced with guide sprockets for engaging the apron chains, and the drive roll 54 would be replaced by drive sprockets.

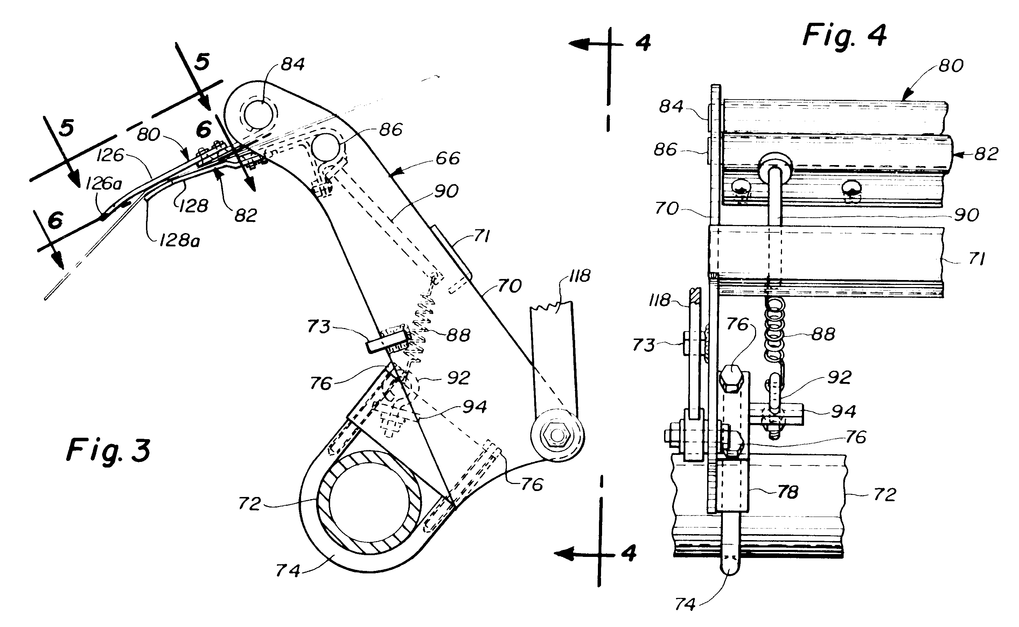

The bale wrapping apparatus 64 shown in Figure 1 includes a dispensing mechanism 66 pivotally mounted on the sledge assembly 28 and a cutting mechanism 68 pivotally mounted on the main frame 12. As best seen in Figures 3 and 4, the dispensing mechanism 66 comprises a pair of levers 70 spaced apart but connected by a frame member 71. The levers 70 are rotatably supported on a cross tube 72 that extends between the arms 36 of the sledge assembly 28. Each lever 70 is attached to the cross tube 72 by a clevis 74, and bolts 76 fasten each clevis 74 to brackets 78 fixed to the levers 70. A stop 73 is carried on one of the levers 70 for engagement with one of the arms 36 of the sledge assembly 28 to limit pivoting movement of the dispensing mechanism 66 in a counterclockwise direction as viewed in Figure 2.

The dispensing mechanism 66 also comprises clamping members 80, 82 extending transversely of the baler 10 between the levers 70 and arranged to dispense sheet material S such as net or plastic film from a supply roll R disposed in a container 83 carried on the baler main frame 12. Container 83 has a lid 85 which may be opened to permit removal of the supply roll R. The clamping members 80 and 82 are mounted respectively on bars 84 and 86 which extend between the levers 70. Springs 88 and links 90 are arranged to urge the clamping member 82 against the clamping member 80. Each spring 88 is connected at one end to one of the links 90 and at the other end to an eye bolt 92 that is fastened to a flange member 94 on one of the brackets 78. The links 90 are engaged with the clamping member 82 in a manner which, due to springs 88, urges the clamping member 82 in a clockwise direction in Figure 3 about the rod 86. As the sheet material S is dispensed from the supply roll R by the dispensing mechanism 66, it passes over a roller shaft 95 which is mounted in and extends transversely of the baler main frame 12.

Referring to Figure 2, the bale wrapping apparatus 64 also includes a power source such as an electric motor 96 mounted on the main frame 12 with an output shaft 97 thereof connected to a large sprocket 98 by a drive chain 100. Another drive chain 102 connects a small sprocket 104 (which is attached to large sprocket 98) with a sprocket 106. A further drive chain 108 connects a small sprocket 110 (which is attached to sprocket 106) with a small sprocket 112. A first link 114 is pinned at one end to drive chain 108 and pivoted at the other end to a second link 116. A third link 118 is pivotally connected between the second link 116 and one of the levers 70 of the dispensing mechanism 66.

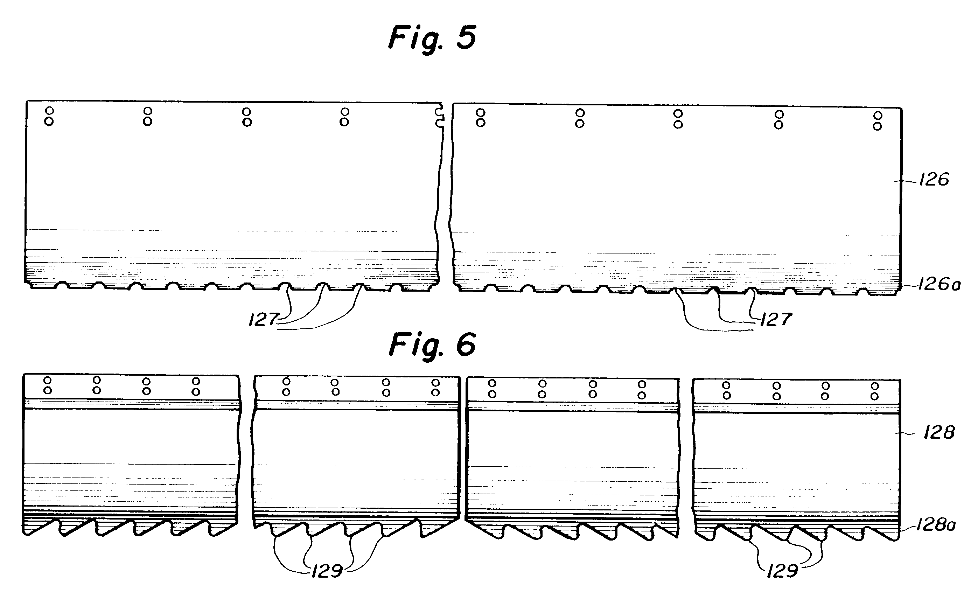

The cutting mechanism 68 includes a pair of spaced apart arms 120 rotatably supported on a shaft 122. A knife 124 is carried by and extends transversely between the arms 120 for engagement with the sheet material S dispensed by the dispensing mechanism 66. The arms 120 are rotated on the shaft 122 by means (not shown) such as a cam actuated linkage connected between one of the arms 120 and the link 114. The clamping members 80 and 82 of the dispensing mechanism 66 include upper and lower plates 126 and 128, respectively, between which the sheet material S is fed. Upper plate 126 has a leading edge 126a with a plurality of generally semicircular notches 127 formed therein as shown in Figure 5 while lower plate 128 has a leading edge 128a with a plurality of serrated teeth 129 formed therein as shown in Figure 6.

When a bale B has been formed in the round baler 10 and it is desired to wrap the bale B with the sheet material S, the electric motor 96 is activated while the apron 42 continues to rotate the bale B in a clockwise direction as viewed in Figure 2. The output shaft 97 of the electric motor 96 drives the sprocket 106 via chains 100, 102. Sprocket 110 drives sprocket 112 via chain 108 which causes movement of the links 114, 116, 118 from the solid line positions of Figure 2 to the broken line positions of Figure 2. This rotates the dispensing mechanism 66 from a retracted position shown in solid lines in Figure 2 to a dispensing position shown in broken lines in Figure 2. In the retracted position of the dispensing mechanism 66, a tail T of the sheet material S is gripped by the clamping members 80, 82 thereby preventing the sheet material S from being fed into the bale forming chamber of the baler 10. However, in the dispensing position of the dispensing mechanism 66, the tail T of the sheet material S is inserted into the bale forming chamber and sheet material S is dispensed from the supply roll R into the bale forming chamber.

As the dispensing mechanism 66 moves toward its dispensing position, the cutting mechanism 68 is rotated clockwise to the position shown in Figure 2 and the clamping members 80, 82 move into a gap 35 between the roller 34 and the apron 42. The tail T of the sheet material S gripped between the clamping members 80, 82 is inserted through the gap 35 into the bale forming chamber where it is caught between the roller 34 and the bale B which are rotating in opposite directions. The sheet material S is then dispensed from the supply roll R, over the roller shaft 95, between the clamping members 80 and 82, and then through the gap 35 into the bale forming chamber where it is wrapped circumferentially around the bale B while the bale B continues to be rotated by the apron 42.

After the bale B has been wrapped with one or more layers of the sheet material S, the electric motor 96 is reversed thereby moving the dispensing mechanism 66 from the dispensing position shown in broken lines in Figure 2 to the retracted position shown in solid lines in Figure 2. The links 114, 116, 118 move back to their solid line positions of Figure 2. When the dispensing mechanism 66 has returned to its retracted position, the cutting mechanism 68 is rotated counterclockwise as viewed in Figure 2 so that the knife 124 is brought downwardly into contact with the sheet material S extending from the clamping members 80, 82 of the dispensing mechanism 66. The knife 124 cuts the sheet material S but leaves another tail T which is gripped by the clamping members 80, 82 for future insertion into the bale forming chamber whenever the next bale is ready to be wrapped with the sheet material S.

The details of the upper and lower plates 126 and 128, respectively, are shown in Figures 5 and 6. The semicircular notches 127 formed in the leading edge 126a of upper plate 126 prevent the tail T of the sheet material S from being carried out of the gap 35 by the apron 42 when the dispensing mechanism 66 is in the dispensing position. In other words, the notches 127 insure proper dispensing of the sheet material S from the supply roll R into the bale forming chamber of the baler 10. The serrated teeth 129 are provided in the leading edge 128a of lower plate 128 for the purpose of allowing the sheet material S to spread to its nominal width as it is being dispensed from the supply roll R. As seen in Figure 6, the serrated teeth 129 are slanted outwardly in opposite directions (i.e. left and right) beginning near the center of the lower plate 128. This orientation of the teeth 129 allows the sheet material S to spread transversely across substantially the full width of the bale forming chamber of the baler 10 and keeps the sheet material S spread while it is being wrapped circumferentially around a cylindrical bale disposed in the bale forming chamber. Teeth 129 also prevent the sheet material S from retracting after it has been cut by the knife 124 thereby assuring the formation of the tail T.

## Claims

1. An agricultural baler (10) having a bale forming chamber for forming cylindrical bales (B) of crop material therein and a bale wrapping apparatus (64) for wrapping sheet material (S) circumferentially around a cylindrical bale (B) disposed in the bale forming chamber; said wrapping apparatus (64) comprising means (66) for dispensing sheet material (S) from a supply source (R), through an inlet (35) of the bale forming chamber, into said chamber and, said dispensing means (66) including means (80, 82, 126, 128) for gripping a tail (T) of the sheet material (S);
said baler (10) being characterized in that the dispensing means (66), together with the gripping means (80, 82, 126, 128) thereof holding a tail (T) of the sheet material (S), are movable between :
- a retracted position at a location remote from said inlet (35) for preventing sheet material (S) from being dispensed into the bale forming chamber, and
- a dispensing position generally at said inlet (35) for presenting said tail (T) at said inlet (35) for insertion into the bale forming chamber.

2. An argricultural baler (10) according to claim 1 characterized in that the bale wrapping apparatus (64) further also comprises means (68) for cutting the sheet material (S) after it has been wrapped around a cylindrical bale (B).

3. An agricultural baler (10) according to claim 2 characterized in that said cutting means (68) is operable to cut the sheet material (S) when the dispensing means (66) are in said retracted position thereby leaving another tail (T) on the sheet material (S) which is gripped by the gripping means (80, 82, 126, 128) for future insertion into the bale forming chamber.

4. An agricultural baler (10) according to any of the preceding claims characterized in that the gripping means (80, 82, 126, 128) comprise a pair of juxtaposed clamping members (80, 126 resp. 82, 128) between which the sheet material (S) is dispensed; said clamping members (80, 126 resp. 82, 128) including an upper plate (126) and a lower plate (128) arranged to grip the tail (T) of the sheet material (S) therebetween.

5. An agricultural baler (10) according to claim 4 characterized in that the lower plate (128) is urged towards the upper plate (126) by resilient means (88, 90).

6. An agricultural baler (10) according to claims 4 and 5 characterized in that the clamping members (80, 126 resp. 82, 128) are supported by and extend between a pair of levers (70) which are spaced apart and rotatably mounted.

7. An agricultural baler (10) according to claim 6 characterized in that moving means (96) are provided for moving the dispensing means (66) between said retracted and dispensing positions; the moving means (96) comprising power means (96) coupled to the pair of levers (70) by link means (114, 116, 118).

8. An agricultural baler (10) according to claim 7 characterized in that :
- said link means (114, 116, 118) comprise first, second and third links (114, 116, 118) connected between said power means (96) and at least one of the pair of levers (70); and
- said power means (96) comprises an electric motor (96).

9. An agricultural baler (10) according to any of the claims 4 to 8 characterized in that the upper plate (126) has a leading edge (126a) provided with a plurality of generally semicircular notches (127) which prevent the tail (T) of the sheet material (S) from being carried out of the bale forming chamber when the dispensing means (66) is in the dispensing position.

10. An agricultural baler (10) according to any of the claims 4 to 9 characterized in that the lower plate (128) has a leading edge (128a) provided with a plurality of serrated teeth (129)
- which allow the sheet material (S) to spread to its nominal width;
- which keep the sheet material (S) spread while it is being dispensed from said supply source (R) into the bale forming chamber of the baler; and
- which prevent the sheet material (S) from retracting after it has been cut by the cutting means (68) thereby assuring formation of the tail (T) of sheet material (S).

11. An agricultural baler (10) according to claim 10 characterized in that the serrated teeth (129) are slanted outwardly in substantially opposite directions beginning near the center of the lower plate (128).

12. An agricultural baler (10) according to any of the preceding claims wherein the baler (10) further comprises :
- a main frame (12);
- a tailgate (18) pivotally connected to said main frame (12);
- a sledge assembly (28) mounted on said main frame (12) for movement between a bale starting position and a full bale position; said sledge assembly (28) including a plurality of rollers (30, 32, 34) extending transversely of the main frame (12); and
- an apron (42) movably supported on the main frame (12) and the tailgate (18); said apron (42) cooperating with the rollers (30, 32, 34) of said sledge assembly (28) to define a bale forming chamber; and
characterized in that the dispensing means (66) are pivotally mounted on said sledge assembly (28) for movement between said retracted position and said dispensing position.

13. An agricultural baler (10) according to claim 12 characterized in that the inlet (35), through which the tail (T) of sheet material (S) is inserted, is formed by a gap (35) between the apron (42) and one of the rollers (34) of the sledge assembly (28); the arrangement being so that, on insertion of said tail (T) through said gap (35) and rotation of the bale (B) in the bale forming chamber by the apron (42), this tail (T) is caught between said one roller (34) and said cylinderical bale (B).

14. An agricultural baler (10) according to claim 13 characterized in that :
- the sledge assembly (28) further also comprises idler means (40) engaging the apron (42) for maintaining said apron (42) in close proximity to said one roller (34) during movement of the sledge assembly (28) between said bale starting and full bale positions; and
- the gap (35) is located between the idler means (40) and said one roller (34).

15. An agricultural baler (10) according to any of the claims 12 to 14 characterized in that the apron (42) has an inner course (42a) which is expandable in length around a portion of the circumference of a cylindrical bale (B) during formation thereof; said inner course (42a) cooperating with the rollers (30, 33, 34) of the sledge assembly (28) to define the bale forming chamber.

16. An agricultural baler (10) according to claim 15 characterized in that :
- the apron (42) comprises a plurality of flat belts arranged side-by-side; the inner course (42a) of the apron (42) forming a rear wall of the bale forming chamber; and
- the rollers (30, 32, 34) of the sledge assembly (28) are disposed in an arcuate arrangement; said rollers (30, 32, 34) forming the front wall of the bale forming chamber.

17. A method of wrapping cylindrical bales (B) of crop material with sheet material (S) in a bale forming chamber of an agricultural baler, said method comprising the step of gripping a tail (T) of the sheet material (S) in dispensing means (66) during formation of a cylindrical bale (B) of crop material in preparation for subsequently dispensing the sheet material (S) through an inlet (35) of the bale forming chamber; and
being characterized in that it further also comprises the steps of :
- moving the dispensing means (66) from a retracted position at a location remote from the inlet (35) of the bale forming chamber to a dispensing position generally at said inlet (35) after completion of a cylindrical bale (B) in the bale forming chamber;
- inserting said tail (T) of the sheet material (S) into the bale forming chamber when the dispensing means (66) is in said dispensing position; and
- moving the dispensing means (66) from the dispensing position to the retracted position after at least one layer of sheet material (S) has been wrapped circumferentially around said cylindrical bale (B).

18. A method according to claim 17 characterized in that it further also comprises the step of cutting the sheet material (S) when the dispensing means (66) is in said retracted position.

19. A method according to claim 17 or 18 characterized in that the gripping step includes clamping the tail (T) of the sheet material (S) between a pair of clamping members (80, 126 resp. 82, 128) to prevent the sheet material (S) from being dispensed when the dispensing means (66) is in said retracted position.

20. A method according to any of the claims 17 to 19 characterized in that the moving step comprises pivoting the dispensing means (66) on the agricultural baler (10).

21. A method according to any of the claims 17 to 20 characterized in that the inserting step is performed without utilizing feed rollers.

22. A method according to claim 18 or any of the claims 19 to 21 when appended to claim 18 characterized in that the cutting step includes rotating a knife (124) into engagement with the sheet material (S).

23. A method according to any of the claims 17 to 22 characterized in that the moving steps are performed by using power means (96) connected to the dispensing means (66).

24. A method according to any of the claims 17 to 23 characterized in that the wrapping step includes rotating the cylindrical bale (B) in the bale forming chamber as the sheet material (S) is wrapped circumferentially around the cylindrical bale (B).

## Patentansprüche

1. Landwirtschaftliche Ballenpresse (10) mit einer Ballenformungskammer zur Formung zylindrischer Ballen (B) aus Erntematerial in dieser Kammer und mit einer Ballenumwickelvorrichtung (64) zum Wickeln von Bahnmaterial (S) in Umfangsrichtung um einen zylindrischen Ballen (B), der in der Ballenformungskammer angeordnet ist, wobei die Umwickelvorrichtung (64) Einrichtungen (66) zur Abgabe von Bahnmaterial (S) von einer Vorratsquelle (R) durch einen Einlaß (35) der Ballenformungskammer in diese Kammer umfaßt und die Abgabeeinrichtung (66) Einrichtungen (80,82,126,128) zum Erfassen eines Endstückes (T) des Bahnmaterials (S) einschließt,
- wobei die Ballenpresse (10) dadurch gekennzeichnet ist, daß die Abgabeeinrichtung (66) zusammen mit deren ein Endstück (T) des Bahnmaterials (S) haltenden Greifeinrichtung (80,82,126, 128) zwischen folgenden Positionen beweglich ist:
- einer zurückgezogenen Position an einer von dem Einlaß (35) entfernten Stelle, um zu verhindern, daß Bahnmaterial (S) in die Ballenformungskammer abgegeben wird, und
- einer Abgabeposition allgemein an dem Einlaß (35), um das Endstück (T) an dem Einlaß (35) zur Einführung in die Ballenformungskammer zuzuführen.

2. Landwirtschaftliche Ballenpresse (10) nach Anspruch 1,
dadurch gekennzeichnet, daß die Ballenumwickelvorrichtung (64) weiterhin Einrichtungen (68) zum Durchtrennen des Bahnmaterials (S) umfaßt, nachdem dieses um einen zylindrischen Ballen (B) gewickelt wurde.

3. Landwirtschaftliche Ballenpresse (10) nach Anspruch 2,
dadurch gekennzeichnet, daß die Schneideinrichtung (68) betätigbar ist, um das Bahnmaterial (S) zu durchtrennen, wenn die Abgabeeinrichtung (66) sich in der zurückgezogenen Position befindet, so daß ein weiteres Endstück (T) des Bahnmaterials (S) verbleibt, das von den Greifeinrichtungen (80,82,126,128) für ein späteres Einführen in die Ballenformungskammer erfaßt ist.

4. Landwirtschaftliche Ballenpresse (10) nach einem der vorhergehenden Ansprüche,
dadurch gekennzeichnet, daß die Greifeinrichtungen (80,82,126, 128) zwei benachbart zueinander angeordnete Klemmteile (80,126 bzw. 82,128) umfassen, zwischen denen das Bahnmaterial (S) abgegeben wird, wobei die Klemmteile (80,126 bzw. 82,128) eine obere Platte (126) und eine untere Platte (128) einschließen, die so angeordnet sind, daß sie das Endstück (T) des Bahnmaterials (S) zwischen sich erfassen.

5. Landwirtschaftliche Ballenpresse (10) nach Anspruch 4,
dadurch gekennzeichnet, daß die untere Platte (128) durch elastische Einrichtungen (88,90) gegen die obere Platte (126) gedrückt ist.

6. Landwirtschaftliche Ballenpresse (10) nach Anspruch 4 und 5, dadurch gekennzeichnet, daß die Klemmteile (80,126 bzw. 82, 128) durch zwei Hebel (70) gehaltert sind und sich zwischen diesen erstrecken, die mit Abstand voneinander angeordnet und drehbar befestigt sind.

7. Landwirtschaftliche Ballenpresse (10) nach Anspruch 6,
dadurch gekennzeichnet, daß Bewegungseinrichtungen (96) zur Bewegung der Abgabeeinrichtungen (66) zwischen der zurückgezogenen Position und der Abgabeposition vorgesehen sind, wobei die Bewegungseinrichtungen (96) Antriebseinrichtungen (96) umfassen, die mit den beiden Hebeln (70) über Gestängeteile (114,116,118) verbunden sind.

8. Landwirtschaftliche Ballenpresse (10) nach Anspruch 7,
dadurch gekennzeichnet, daß:
- die Gestängeeinrichtungen (114,116,118) erste, zweite und dritte Gestänge (114,116,118) umfassen, die zwischen den Antriebseinrichtungen (96) an zumindestens einem der beiden Hebel (70) angeschlossen sind, und
- die Antriebseinrichtungen (96) einen Elektromotor (96) umfassen.

9. Landwirtschaftliche Ballenpresse (10) nach einem der Ansprüche 4 - 8,
dadurch gekennzeichnet, daß die obere Platte (126) eine Vorderkante (126a) aufweist, die mit einer Vielzahl von allgemein halbkreisförmigen Kerben (127) versehen ist, die verhindern, daß das Endstück (T) des Bahnmaterials (S) aus der Ballenformungskammer herausbewegt wird, wenn sich die Abgabeeinrichtung (66) in der Abgabeposition befindet.

10. Landwirtschaftliche Ballenpresse (10) nach einem der Ansprüche 4 - 9,
dadurch gekennzeichnet, daß die untere Platte (128) eine Vorderkante (128a) aufweist, die mit einer Vielzahl von geriffelten Zähnen (129) versehen ist,
- die es dem Bahnmaterial (S) ermöglichen, sich auf seine Nennbreite aufzuspreizen,
- die das Bahnmaterial (S) aufgespreizt halten, während dieses von der Vorratsquelle (R) in die Ballenformungskammer der Ballenpresse abgegeben wird, und
- die verhindern, daß das Bahnmaterial (S) zurückgezogen wird, nachdem es durch die Schneideinrichtung (68) durchschnitten wurde, wodurch die Bildung des Endstückes (T) des Bahnmaterials (S) sichergestellt wird.

11. Landwirtschaftliche Ballenpresse (10) nach Anspruch 10,
dadurch gekennzeichnet, daß die geriffelten Zähne (129) in im wesentlichen entgegengesetzten Richtungen beginnend in der Nähe des Mittelpunktes der unteren Platte (128) nach außen geneigt sind.

12. Landwirtschaftliche Ballenpresse (10) nach einem der vorhergehenden Ansprüche, bei der die Ballenpresse (10) weiterhin folgende Teile umfaßt:
- einen Hauptrahmen (12),
- eine Heckklappe (18), die schwenkbar an dem Hauptrahmen (12) befestigt ist,
- eine Schlittenbaugruppe (28), die auf dem Hauptrahmen (12) für eine Bewegung zwischen einer Ballenanfangsposition und einer einem fertigen Ballen entsprechenden Position befestigt ist, wobei die Schlittenbaugruppe (28) eine Vielzahl von Walzen (30,32,34) einschließt, die sich in Querrichtung des Hauptrahmens (12) erstrecken, und
- eine Umschlingungseinrichtung (42), die beweglich auf dem Hauptrahmen (12) und der Heckklappe (18) gehaltert ist, wobei die Umschlingungseinrichtung (42) mit den Walzen (30,32, 34) der Schlittenbaugruppe (28) zusammenwirkt, um eine Ballenformungskammer zu bilden,
dadurch gekennzeichnet, daß die Abgabeeinrichtungen (66) schwenkbar auf der Schlittenbaugruppe (28) für eine Bewegung zwischen der zurückgezogenen Position und der Abgabeposition befestigt sind.

13. Landwirtschaftliche Ballenpresse (10) nach Anspruch 12,
dadurch gekennzeichnet, daß der Einlaß (35), durch den das Endstück (T) des Bahnmaterials (S) eingeführt wird, durch einen Spalt (35) zwischen der Umschlingungseinrichtung (42) und einer der Walzen (34) der Schlittenbaugruppe (28) gebildet ist, wobei die Anordnung derart ist, daß beim Einführen des Endstückes (T) durch den Spalt (35) und bei einer Drehung des Ballens (B) in der Ballenformungskammer mit Hilfe der Umschlingungseinrichtung (42) dieses Endstück (T) zwischen der einen Walze (34) und dem zylindrischen Ballen (B) eingefangen wird.

14. Landwirtschaftliche Ballenpresse (10) nach Anspruch 13,
dadurch gekennzeichnet, daß:
- die Schlittenbaugruppe (28) weiterhin Leerlaufeinrichtungen (40) umfaßt, die mit der Umschlingungseinrichtung (42) in Eingriff kommen, um diese Umschlingungseinrichtung (42) eng benachbart zu der einen Walze (34) während der Bewegung der Schlittenbaugruppe (28) zwischen der Ballenanfangsposition und der einem fertigen Ballen entsprechenden Position zu halten, und
- der Spalt (35) zwischen der Leerlaufeinrichtung (40) und der einen Walze (34) liegt.

15. Landwirtschaftliche Ballenpresse (10) nach einem der Ansprüche 12 - 14,
dadurch gekennzeichnet, daß die Umschlingungseinrichtung (42) einen inneren Strang (42a) aufweist, dessen Länge um einen Teil des Umfanges des zylindrischen Ballens (B) während dessen Formung ausdehnbar ist, wobei der innere Strang (42a) mit den Walzen (30,33,34) der Schlittenbaugruppe (28) zusammenwirkt, um die Ballenformungskammer zu umgrenzen.

16. Landwirtschaftliche Ballenpresse (10) nach Anspruch 15,
dadurch gekennzeichnet, daß:
- die Umschlingungseinrichtung (42) eine Vielzahl von flachen Riemen umfaßt, die Seite an Seite zueinander angeordnet sind, wobei der innere Strang (42a) der Umschlingungseinrichtung (42) eine Rückwand der Ballenformungskammer bildet, und
- die Walzen (30,32,34) der Schlittenbaugruppe (28) in einer bogenförmigen Anordnung angeordnet sind, wobei die Walzen (30,32,34) die Vorderwand der Ballenformungskammer bilden.

17. Verfahren zum Umwickeln zylindrischer Ballen (B) aus Erntematerial mit Bahnmaterial (S) in einer Ballenformungskammer in einer landwirtschaftlichen Ballenpresse, wobei das Verfahren den Schritt des Ergreifens eines Endstückes (T) des Bahnmaterials (S) in einer Abgabeeinrichtung (66) während der Formung eines zylindrischen Ballens (B) aus Erntematerial zur Vorbereitung einer nachfolgenden Abgabe des Bahnmaterials (S) durch einen Einlaß der Ballenformungskammer umfaßt und dadurch gekennzeichnet ist, daß es weiterhin die folgenden Schritte umfaßt:
- Bewegen der Abgabeeinrichtung (66) von einer zurückgezogenen Position an einer von dem Einlaß (35) der Ballenformungskammer entfernten Stelle auf eine Abgabeposition allgemein an diesem Einlaß (35) nach der Fertigstellung eines zylindrischen Ballens (B) in der Ballenformungskammer,
- Einführen des Endstückes (T) des Bahnmaterials (S) in die Ballenformungskammer, wenn sich die Abgabeeinrichtung (66) in der Abgabeposition befindet, und
- Bewegen der Abgabeeinrichtung (66) von der Abgabeposition auf die zurückgezogene Position, nachdem zumindestens eine Schicht des Bahnmaterials (S) in Umfangsrichtung um den zylindrischen Ballen (B) gewickelt wurde.

18. Verfahren nach Anspruch 17,
dadurch gekennzeichnet, daß es weiterhin den Schritt des Durchschneidens des Bahnmaterials (S) umfaßt, wenn sich die Abgabeeinrichtung (66) in der zurückgezogenen Position befindet.

19. Verfahren nach Anspruch 17 oder 18,
dadurch gekennzeichnet, daß der Schritt des Ergreifens das Einklemmen des Endstückes (T) des Bahnmaterials (S) zwischen zwei Klemmteilen (80,126 bzs. 82,128) einschließt, um zu verhindern, daß das Bahnmaterial (S) abgegeben wird, wenn sich die Abgabeeinrichtung (66) in der zurückgezogenen Position befindet.

20. Verfahren nach einem der Ansprüche 17 - 19,
dadurch gekennzeichnet, daß der Bewegungsschritt das Verschwenken der Abgabeeinrichtung (66) auf der landwirtschaftlichen Ballenpresse (10) umfaßt.

21. Verfahren nach einem der Ansprüche 17 - 20,
dadurch gekennzeichnet, daß der Schritt des Einführens ohne die Verwendung von Zuführungswalzen durchgeführt wird.

22. Verfahren nach Anspruch 18 oder einem der Ansprüche 19 - 21 unter Rückbeziehung auf Anspruch 18,
dadurch gekennzeichnet, daß der Schneidschritt die Drehung eines Messers (124) in Eingriff mit dem Bahnmaterial (S) einschließt.

23. Verfahren nach einem der Ansprüche 17 - 22,
dadurch gekennzeichnet, daß die Bewegungsschritte unter Verwendung von Antriebseinrichtungen (96) ausgeführt werden, die mit der Abgabeeinrichtung (66) verbunden sind.

24. Verfahren nach einem der Ansprüche 17 - 23,
dadurch gekennzeichnet, daß der Umwicklungsschritt die Drehung des zylindrischen Ballens (B) in der Ballenformungskammer einschließt, während das Bahnmaterial (S) in Umfangsrichtung um den zylindrischen Ballen (B) gewickelt wird.

## Revendications

1. Ramasseuse-presse agricole (10) équipée d'une chambre de formage de balles destinée à former en elle des balles cylindriques (B) de produits de récolte, et d'un appareil d'enveloppement de balles (64) destiné à enrouler un matériau en feuille (S) circonférentiellement autour d'une balle cylindrique (B) disposée dans la chambre de formage de balles ; ledit appareil d'enveloppement (64) comportant des moyens distributeurs (66) destinés à délivrer le matériau en feuille (S) à partir d'une source d'alimentation (R), à travers un orifice d'entrée (35) de la chambre de formage de balles, dans ladite chambre et, lesdits moyens distributeurs (66) comprenant des moyens de préhension (80, 82, 126, 128) destinés à saisir un bout (T) du matériau en feuille (S) ;
ladite ramasseuse-presse (10) étant caractérisée en ce que les moyens distributeurs (66) ainsi que leurs moyens de préhension (80, 82, 126, 128) qui tiennent le bout (T) du matériau en feuille (S), sont mobiles entre :
- une position rétractée située au niveau d'un emplacement éloigné dudit orifice d'entrée (35) pour empêcher que le matériau en feuille (S) ne soit délivré dans la chambre de formage de balles, et
- une position de distribution située, d'une manière générale, au niveau dudit orifice d'entrée (35) pour présenter ledit bout (T) au niveau dudit orifice d'entrée (35) en vue de l'introduire dans la chambre de formage de balles.

2. Ramasseuse-presse agricole (10) selon la revendication 1, caractérisée en ce que l'appareil d'enveloppement de balles (64) comporte, en outre, des moyens de coupe (68) destinés à couper le matériau en feuille (S) une fois qu'il a été enroulé autour d'une balle cylindrique (B).

3. Ramasseuse-presse agricole (10) selon la revendication 2, caractérisée en ce que lesdits moyens de coupe (68) sont aptes à agir pour couper le matériau en feuille (S) lorsque les moyens distributeurs (66) sont dans ladite position rétractée pour ainsi laisser sur le matériau en feuille (S) un autre bout (T) qui est saisi par les moyens de préhension (80, 82, 126, 128) en vue de son introduction future dans la chambre de formage de balles.

4. Ramasseuse-presse agricole (10) selon l'une quelconque des revendications précédentes, caractérisée en ce que les moyens de préhension (80, 82, 126, 128) comprennent deux organes de serrage juxtaposés (80, 126, respectivement, 82, 128) entre lesquels le matériau en feuille (S) est délivré ; lesdits organes de serrage (80, 126 respectivement 82, 128) comprenant une plaque supérieure (126) et une plaque inférieure (128) disposées pour saisir entre elles le bout (T) du matériau en feuille (S).

5. Ramasseuse-presse agricole (10) selon la revendication 4, caractérisée en ce que la plaque inférieure (128) est sollicitée en direction de la plaque supérieure (126) par des moyens élastiques (88, 90).

6. Ramasseuse-presse agricole (10) selon les revendications 4 et 5, caractérisée en ce que les organes de serrage (80, 126 respectivement 82, 128) sont supportés par deux leviers (70) et s'étendent entre lesdits leviers (70) qui sont espacés l'un de l'autre et montés mobiles en rotation.

7. Ramasseuse-presse agricole (10) selon la revendication 6, caractérisée en ce que des moyens de déplacement (96) sont prévus pour déplacer les moyens distributeurs (66) entre lesdites positions rétractées et de distribution ; les moyens de déplacement (96) consistant en des moyens d'actionnement (96) accouplés avec les deux leviers (70) par des moyens formant tringles (114, 116, 118).

8. Ramasseuse-presse agricole (10) selon la revendication 7, caractérisée en ce que :
- lesdits moyens formant tringles (114, 116, 118) comprennent des première, seconde et troisième tringles (114, 116, 118) montées entre lesdits moyens d'actionnement (96) et l'un au moins des deux leviers (70) ; et
- lesdits moyens d'actionnement (96) consistent en un moteur électrique (96).

9. Ramasseuse-presse agricole (10) selon l'une quelconque des revendications 4 à 8, caractérisée en ce que la plaque supérieure (126) possède un bord d'attaque (126a) pourvu de plusieurs encoches sensiblement semi-circulaires (127) qui évitent que le bout (T) du matériau en feuille (S) ne soit entraîné hors de la chambre de formage de balles lorsque les moyens distributeurs (66) sont dans la position de distribution.

10. Ramasseuse-presse agricole (10) selon l'une quelconque des revendications 4 à 9, caractérisée en ce que la plaque inférieure (128) possède un bord d'attaque (128a) pourvu de plusieurs dents de scie (129) qui
- permettent au matériau en feuille (S) de s'étaler sur sa largeur nominale ;
- maintiennent le matériau en feuille (S) pendant qu'il est délivré à partir de ladite source d'alimentation (R) dans la chambre de formage de balles de la ramasseuse-presse ; et
- empêchent le matériau en feuille (S) de se rétracter après qu'il a été coupé par les moyens de coupe (68) pour ainsi assurer la formation du bout (T) du matériau en feuille (S).

11. Ramasseuse-presse agricole (10) selon la revendication 10, caractérisée en ce que les dents de scie (129) sont inclinées vers l'extérieur dans des directions sensiblement opposées, à partir d'un point proche du centre de la plaque inférieure (128).

12. Ramasseuse-presse agricole (10) selon l'une quelconque des revendications précédentes, dans laquelle la ramasseuse-presse (10) comporte, en outre :
- un châssis principal (12) ;
- une ridelle arrière (18) reliée d'une manière pivotante audit châssis principal (12) ;
- un ensemble coulissant (28) monté sur ledit châssis principal (12) en vue de se déplacer entre une position de démarrage de balle et une position de balle finie ; ledit ensemble coulissant (28) comprenant plusieurs rouleaux (30, 32, 34) qui s'étendent transversalement par rapport au châssis principal (12) ; et
- un tapis (42) supporté d'une manière mobile sur le châssis principal (12) et la ridelle arrière (18) ; ledit tapis (42) coopérant avec les rouleaux (30, 32, 34) dudit ensemble coulissant (28) pour définir une chambre de formage de balles ; et
caractérisée en ce que les moyens distributeurs (66) sont montés pivotants sur ledit ensemble coulissant (28) en vue de se déplacer entre ladite position rétractée et ladite position de distribution.

13. Ramasseuse-presse agricole (10) selon la revendication 12, caractérisée en ce que l'orifice d'entrée (35) à travers lequel le bout (T) du matériau en feuille (S) est introduit, est formé par un espace (35) défini entre le tapis (42) et l'un (34) des rouleaux de l'ensemble coulissant (28) ; le dispositif étant tel que, lorsque ledit bout (T) est introduit à travers ledit espace (35) et que la balle (B) est entraînée en rotation dans la chambre de formage de balles par le tapis (42), ce bout (T) est saisi entre ledit rouleau (34) et ladite balle cylindrique (B).

14. Ramasseuse-presse agricole (10) selon la revendication 13, caractérisée en ce que :
- l'ensemble coulissant (28) comprend, en outre, des moyens libres (40) qui viennent en prise avec le tapis (42) pour maintenir celui-ci tout près dudit rouleau (34) pendant un déplacement de l'ensemble coulissant (28) entre lesdites positions de démarrage de balle et de balle finie ; et
- l'espace (35) est situé entre les moyens libres (40) et ledit rouleau (34).

15. Ramasseuse-presse agricole (10) selon l'une quelconque des revendications 12 à 14, caractérisée en ce que le tapis (42) possède un brin intérieur (42a) extensible en longueur autour d'une partie de la circonférence d'une balle cylindrique (B) pendant la formation de celle-ci ; ledit brin intérieur (42a) coopérant avec les rouleaux (30, 33, 34) de l'ensemble coulissant (28) pour définir la chambre de formage de balles.

16. Ramasseuse-presse agricole (10) selon la revendication 15, caractérisée en ce que :
- le tapis (42) comprend plusieurs courroies plates disposées côte à côte ; le brin intérieur (42a) du tapis (42) formant une paroi arrière de la chambre de formage de balles ; et
- les rouleaux (30, 32, 34) de l'ensemble coulissant (28) sont agencés suivant une disposition en arc ; lesdits rouleaux (30, 32, 34) formant la paroi avant de la chambre de formage de balles.

17. Méthode pour envelopper des balles cylindriques (B) de produits de récolte avec un matériau en feuille (S) dans une chambre de formage de balles d'une ramasseuse-presse agricole, ladite méthode comportant l'étape qui consiste à saisir un bout (T) du matériau en feuille (S) dans des moyens distributeurs (66) pendant la formation d'une balle cylindrique(B) de produits de récolte en vue de délivrer ensuite le matériau en feuille (S) à travers un orifice d'entrée (35) de la chambre de formage de balles ; et
caractérisée en ce qu'elle comporte, en outre, les étapes qui consistent à :
- déplacer les moyens distributeurs (66) d'une position rétractée située au niveau d'un emplacement éloigné de l'orifice d'entrée (35) de la chambre de formage de balles vers une position de distribution située, d'une manière générale, au niveau dudit orifice d'entrée (35) une fois terminée une balle cylindrique (B) dans la chambre de formage de balles ;
- introduire ledit bout (T) du matériau en feuille (S) dans la chambre de formage de balles lorsque les moyens distributeurs (66) sont dans ladite position de distribution ; et
- déplacer les moyens distributeurs (66) de la position de distribution vers la position rétractée une fois qu'au moins une couche du matériau en feuille (S) a été enroulée circonférentiellement autour de ladite balle cylindrique (B).

18. Méthode selon la revendication 17, caractérisée en ce qu'elle comporte, en outre, l'étape qui consiste à couper le matériau en feuille (S) lorsque les moyens distributeurs (66) sont dans ladite position rétractée.

19. Méthode selon la revendication 17 ou 18, caractérisée en ce que l'étape de préhension consiste à serrer le bout (T) du matériau en feuille (S) entre deux organes de serrage (80, 126 respectivement 82, 128) pour empêcher que le matériau en feuille (S) ne soit délivré lorsque les moyens distributeurs (66) sont dans ladite position rétractée.

20. Méthode selon l'une quelconque des revendications 17 à 19, caractérisée en ce que l'étape de déplacement consiste à faire pivoter les moyens distributeurs (66) sur la ramasseuse-presse agricole (10).

21. Méthode selon l'une quelconque des revendication 17 à 20, caractérisée en ce que l'étape d'introduction est réalisée sans l'utilisation de rouleaux d'alimentation.

22. Méthode selon la revendication 18 ou l'une quelconque des revendications 19 à 20, lorsque celles-ci sont dépendantes de la revendication 18, caractérisée en ce que l'étape de coupe consiste à faire pivoter un couteau (124) pour l'amener en contact avec le matériau en feuille (S).

23. Méthode selon l'une quelconque des revendications 17 à 22, caractérisée en ce que les étapes de déplacement sont réalisées à l'aide de moyens d'actionnement (96) reliés aux moyens distributeurs (66).

24. Méthode selon l'une quelconque des revendications 17 à 23, caractérisée en ce que l'étape d'enveloppement consiste à faire tourner la balle cylindrique (B) dans la chambre de formage de balles pendant que le matériau en feuille (S) est enroulé circonférentiellement autour de la balle cylindrique (B).
